# EUROPEAN PATENT SPECIFICATION

(11) **EP 0 524 505 B1**
(45) Date of publication and mention of the grant of the patent: **13.11.1996**
(21) Application number: 92111790.9
(22) Date of filing: 10.07.1992
(51) Int. Cl.: C08J 9/14, C08J 9/36

(54) **Foamed plastic and method of manufacturing the same**
Geschäumtes Polymer und Verfahren zu seiner Herstellung
Polymère expansé et sa méthode de préparation

(30) Priority: 26.07.1991 JP 187696/91
(43) Date of publication of application: 27.01.1993
(73) Proprietor: MATSUSHITA ELECTRIC INDUSTRIAL CO., LTD., Kadoma-shi, Osaka-fu, 571 (JP)
(72) Inventor: Ogawa, Kazufumi, Hirakata-shi 573, Osaka (JP)
(74) Representative: Grünecker, Kinkeldey, Stockmair & Schwanhäusser Anwaltssozietät

(56) References cited:
- US-A- 3 723 318
- US-A- 4 898 893
- DATABASE WPIL (DERWENT), accession no. 83-15929K (07), Derwent Publications Ltd, London, GB; & JP-A-58 001 714

## Description

### FIELD OF THE INVENTION

The present invention relates to foamed plastics useful as soundproof and heat insulting materials, and a method of manufacturing the same, and in particular to foamed plastics excellent in soundproof and heat insulating effects and a method of manufacturing the same.

### BACKGROUND OF THE INVENTION

It has been hitherto known that properties such as heat insulation, sound absorption. buoyancy, elasticity and weight reduction are improved by mechanically foaming plastics, foaming by using reactive gas or foaming by using foaming agents, and such foamed plastics are widely used in the soundproof material, heat insulator. building material, lightweight structural material, packaging material, insulating material, cushion, material, quakeproof material, footwear, automobile interior, and others. Many usable resins and various foaming techniques are known for manufacturing foamed plastics.

Recently, in order to save energy, save resources and save space, it is desired to improve the heat insulation and soundproof performance with a material that is thin as possible.

To improve the heat insulation or soundproof performance per unit thickness, it is desirable to maintain a vacuum inside of the foamed plastics. In using a vacuum pump as generally known, it is impossible to maintain a vacuum individually in the foamed plastics. and the heat insulation and soundproof qualities are not satisfactory.

### SUMMARY OF THE INVENTION

It is hence an object of the invention to solve the above-discussed problems of the prior art, by presenting foamed plastics enhanced in heat insulation and soundproof qualities and a method of manufacturing the same.
According to a first aspect of the invention, this object is achieved by a foamed plastic comprising many foam-cells, wherein the pressure in the foam-cells is less than atmospheric pressure, and said foam-cells contain a polymerized foaming agent, which is obtained by polymerization of a volatile foaming agent having an unsaturated carbon bond by energy beam irradiation.

It is preferable in this invention that metal is deposited on the surface of the foamed plastic.

It is preferable in this invention that the foamed plastic comprises at least one resin selected from the group consisting of polystyrene resins, vinyl chloride resins, polyurethane resins, phenol resins, urea resins, epoxy resins, polyethylene resins, polypropylene resins, methacryl resins and silicone resins.
According to a second aspect of the invention, this object is achieved by a foamed plastic covered with an airtight film, wherein the pressure in the foam-cells and the pressure in a gap region between the airtight film and the foamed plastic is less than atmospheric pressure, said foamed plastic containing a polymerized foaming agent, which is obtained by polymerization of a volatile foaming agent having an unsaturated carbon bond by energy beam irradiation, in the foam-cells and the gap region.

It is preferable in this invention that the airtight film is at least one film selected from the group consisting of polyvinylidene chloride, polyvinyl chloride, polyethylene, polypropylene, polybutadiene, nylon, polycarbonate, cellophane, polyvinyl alcohol, polyester, metal deposition films and aluminum foil.

It is preferable in this invention that the foamed plastic comprises at least one resin selected from the group consisting of polystyrene resins, vinyl chloride resins, polyurethane resins, phenol resins, urea resins, epoxy resins, polyethylene resins, polypropylene resins methacrylic resins and silicone resins.

According to a third aspect, the invention provides a method of manufacturing a foamed plastic comprising foaming a mixture of a volatile polymerizable foaming agent having an unsaturated carbon bond and a resin, and irradiating the foamed mixture with an energy beam.

It is preferable in this invention that a metal is deposited on the surface of the foamed plastic.

According to a fourth aspect, the invention provides a method of manufacturing foamed plastic comprising sealing a mixture of a resin and a volatile polymerizable foaming agent having an unsaturated carbon bond with an airtight film, foaming the mixture and irradiating the foamed mixture with an energy beam through the airtight film.
According to the first aspect of the invention, by polymerizing a foaming agent which is a volatile polymerizable monomer having an unsaturated carbon bond existing in the foam-cells the foaming agent is solidified, and the internal region of the foam-cells or the gap region between the airtight film and the foamed plastic may be reduced in pressure by initially applying a vacuum. As a result, the foamed plastics can be realized which are improved in heat insulation and soundproof performance.

It is preferable in this invention that the internal foam-cell region or the gap region is reduced in pressure by initially applying a vacuum when a metal is deposited or vaporized onto the surface of the foamed plastics.

According to the second aspect of the invention, the pressure in the internal region of the foam-cells and the pressure in the gap region between the airtight film and foamed plastic are kept less than the atmospheric pressure for a longer period of time by covering the foamed plastic by the metal film or laminated film.

According to the first and second aspect of the invention in which the airtight film is at least a single film or a complex film selected from the group consisting of polyvinylidene chloride, polyvinyl chloride, polyethylene, polypropylene, nylon, polycarbonate, cellophane, polyvinyl alcohol, polyester, metal deposition films and aluminum foil, the internal of the foam-cells and the gap may be maintained at a reduced pressure state, i.e., in a highly airtight state.

It is preferable in the first and second aspect of the invention that the foamed plastic is obtained from at least one resin selected from the group consisting of polystyrene resins, vinyl chloride resins, polyurethane resins, phenol resins, urea resins, epoxy resins, polyethylene resins, polypropylene resins, methacrylic resins and silicone resins by foaming said resin.

In the method of the invention, the foamed plastic of the first aspect of the invention may be manufactured efficiently and rationally.

In a preferred constitution of the invention in which the foaming step is followed by the energy beam irradiating step and the step of depositing metal on the surface of the foamed plastic, the internal of the foam-cells and the gap may be kept at a reduced presssure state for a long period of time.

According to another aspect of the invention, the foamed plastic of the second aspect of the invention may be manufactured efficiently and rationally.

The polymerizable foaming agent used in the present invention contains an unsaturated carbon bond and is polymerized by irradiation with an energy beam to reduce the pressure in the internal region of the foam-cells and the gap after foaming.

Since the pressure inside the foam-cells and the gap region between the airtight film and the foamed plastic is reduced, the soundproof and heat insulating effects of the foamed plastics are improved.

### BRIEF DESCRIPTION OF THE DRAWING

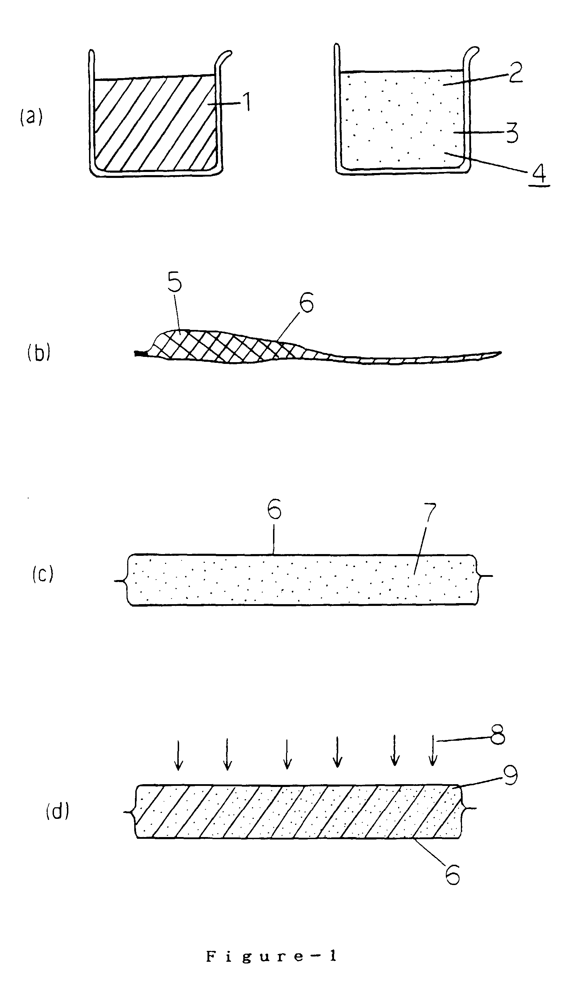

Figures 1 (a) to (d) show a schematic sectional view for explaining the manufacturing process of the foamed polyurethane of Example 2 of the invention.

### DETAILED DESCRIPTION OF THE INVENTION

According to the first aspect of the invention, the foamed plastic of the invention has solved the problems of the prior art because the heat insulation and soundproof performance are enhanced by using a volatile liquid polymerizable monomer having an unsaturated carbon bond as a foaming agent, irradiating with an energy beam after the foaming step to polymerize the foaming agent, and reducing pressure inside the foam-cells. For example, CF₂=CFOC₃F₇ (bp. 35 °C) is used as a foaming agent mixed with a foamable material, for example, a polyol, and irradiated with an energy beam such as electron beam, X-rays, γ-rays or ultra voilet rays. After these process steps the foaming agent (polymerizable monomer) inside the independent foam-cells contained in the foamed plastic is polymerized so that the soundproof and heat insulating effects of plastic, such as foamed polyurethane, are enhanced.

The foamed plastic of the invention contains a polymerized foaming agent, and is manufactured by a method comprising the steps of mixing the foaming agent and the resin, and irradiating this mixture with an energy beam.

The second aspect of the invention is further described below. It is also possible to foam and irradiate with the energy beam after deaerating and sealing the resin material in an airtight film. Thus the polymerizable monomer is solidified, and the inside of the foam-cells and gaps between the foamed plastic and the airtight film is reduced in pressure. In the manufacturing second method, a mixture of the foaming agent and the resin is initially sealed in an airtight film.

The foamed plastic of the invention may be roughly classified in two types. One is the foamed plastic alone, and the other is the foamed plastic covered with an airtight film. The manufacturing method of the foamed plastic alone comprises the steps of foaming after mixing a foaming agent which is a volatile polymerizable monomer having an unsaturated carbon bond and resin and irradiating the foamed resin with an energy beam to polymerize the foaming agent inside the foam-cells, thereby producing a foamed plastic excellent in soundproof and heat insulating effects. The method of manufacturing the foamed plastic using an airtight film covering comprises the steps of hermetically sealing the mixture of a foaming agent, which is a volatile liquid polymerizable monomer having an unsaturated carbon bond, and a resin with an airtight film, foaming the mixture, and irradiating the foamed resin with an energy beam to polymerize the foaming agent in the foam-cells and the gap region between the airtight film and the foamed resin, thereby obtaining a foamed plastic high in soundproof and heating insulating effects.

Resin pellets were synthesized by the suspension polymerization of a resin monomer. Foamable resin beads were obtained by ordinary means such as impregnation or diffusion of a foaming agent into the set pellets of spherically shaped pellets. For example a diffusion solution containing the foaming agent in a pressure kiln, was used and the foamed plastic was formed by extrusion of the mixture of the resin and the foaming agent. Other methods widely employed in this field can be utilized.

As the materials for preparing the foamed plastic of the invention, thermoplastic resins or thermosetting resins may be used, and among these resins, for example, polystyrene, polyethylene, polyvinyl chloride, polyurethane, phenol resins, urea resins, epoxy resins, silicone resins and methacrylic resins are particularly desired because they are applicable in wide fields. When using thermosetting resins, catalysts such as reaction promoters and reaction retardants may be used as required. For example, radical polymerization initiators such as benzoyl peroxide -and azoisobutyronitrile which are known hardening catalysts may be preliminarily added to the foaming agent monomer or resin material as the thermosetting catalyst for polymerizing the foaming agent monomer.

The foamed plastic of the invention is based on the technical concept of enhancing the heat insulating and soundproof effects by polymerizing the foaming agent in the foam-cells so that the pressure in the internal region of the foamed plastic is lower than the atmospheric pressure. By using foaming agents having an unsaturated carbon bond such as a double bond group of carbon (C=C) or a triple bond group of carbon (C≡C) (ethynyl group), it is possible to polymerize and solidify easily by energy beam irradiation means which is very convenient. For example, the following compounds may be listed.

The boiling point of these compounds is indicated in an abbreviated form of b.p.
(1) bp. 35 °C : CF₂=CFOC₃F₇ or CHCl=CClF
(2) bp. 30 °C : CF₃CF₂CF₂CH=CH₂ or CF₂=CFl
(3) bp. 40 °C : CF₃COOCH=CH₂
(4) bp. 54 °C : CH₂=CHC₄H₉
(5) bp. 63 °C : CH₂=CHCH₂N(CH₃)₂
(6) bp. 81°C : F (CF₂)₅CF=CF₂
(7) bp. 73 °C : CH₂=CHCF₂CF₂CH=CH₂
(8) bp. 71 °C : CCl₂=CClF

These foaming agents may be used either alone or in combination. The foaming agent may be mixed together with an additive such as a foam shaping agent according to the conventional procedure.

Deposition of a metal on the surface of the foamed plastic is preferable because the heat radiation may be reduced thereby. As the metal material, for example, ordinary metal materials high in reflectivity such as aluminum and silver, may be used.

As the airtight film for covering the foamed plastic of the invention, any highly airtight film may be used, for example, a polyvinylidene chloride film, a polyethylene film, a polyester film or a polybutadiene film. It is more preferable when these films are laminates containing thermosensitive adhesives because the foamed plastic may be tightly sealed. It is moreover desired if the film is a metal deposition film e.g. obtained by aluminum deposition or silver deposition or a film having a metal foil, such as an aluminum foil or a silver foil,because the radiation heat may be reduced.

By controlling the concentration of the foaming agent in the resin and adding a surface active agent, a foamed resin of the independent foam-cell type (many foam-cells in the foamed resin are individually separated with walls) or a foamed resin of the continuous foam-cell type (open cell type, many foam-cells are connected with each other without wall) may be prepared as desired.
In the invention foamed plastics of the independent foam-cell type and the continuous foam-cell type can be used.

The embodiments are sequentially described in more detail in the Examples. The first embodiment (Examples 1 and 3) relates to a foamed plastic of the independent foam-cell type.

### EXAMPLE 1

50 g of a polyester based polyol with an average molecular weight of about 2000 as a base polymer produced by the condensation polymerization of adipic acid and ethylene glycol and 30 g of CF₂=CFOC₃F₇ (b.p. 35 °C) as a volatile foaming agent having an unsaturated group were blended to prepare 80 g of a foaming hardening liquid, which was then further mixed with 60 g of hexamethylene diisocyanate as a hardening agent. The mixing ratio of the alcohol group and the isocyanate group should be nearly equimolecular. The mixture was immediately put into a forming container having a gap of about 5 cm. Then the mixture was foamed and formed by reaction heat because the boiling point of the foaming agent was 35 °C, and was solidified in scores of seconds to several minutes, thereby producing a foamed polyurethane of the independent foam-cell type.

Then the foamed urethane resin was taken out of the forming container, and irradiated with about 0,05 to 1 MGy (5 to 100 Mrads), preferably 0,1 to 0,2 MGy (10 to 20 Mrads), of electron beams accelerated to about 128 fJ (800 KeV). Electron rays were also transmitted sufficiently when the thickness was about 5 cm. By the irradiation, the CF₂=CFOC₃F₇ which was the volatile foaming agent with an unsaturated group in the independent foam-cells was polymerized to form a solid polymer, and then the space in the independent foam-cells was evacuated. By adding 1 g of benzoyl peroxide to 30 g of the CF₂=CFOC₃F₇, the CF₂=CFOC₃F₇ could be polymerized to a higher molecular weight.

Thus prepared foamed polyurethane was improved in the heat insulating characteristics about twice as compared with the material without electron ray irradiation. The soundproof effect was also improved about twice as much.

On the surface of thus obtained foamed urethane, when a metal having high heat ray reflection properties, such as aluminum, was vacuum deposited at around 1000 Angstroms (100 nm), the heat radiation was considerably reduced, and the heat insulating effect was further enhanced. Moreover, when irradiated with electron rays after sealing with an Al laminate film in a vacuum after foaming, the durability was enhanced together with the heat insulating effect.

Still more, by adding several percents of dimethyl siloxane, which is a surface active agent, as a foam shaping agent, the foam building force and foam stability were enhanced. A catalyst, such as a tertiary amine (for example, pentamethyldietylene triamine) or an organic tin compound (for example, dibutyl tin dilaurate) can be added to encourage the reaction of polyol and isocyanate, thereby promoting the resin formation.

In order to improve the properties, the polyol, hardening agent and foaming agent may be selected freely, or blends may be used. In particular, when using blended monomers with a small amount of foaming agent, a copolymer is produced by the irradiation, and the pressure reducing effect becomes larger.

When using a foaming agent of which the boiling point is around 60°C, it is necessary to heat to about 100°C for the foaming after mixing the hardening agent containing the polyol and the foaming agent.

The following starting materials can be processed in the same way as disclosed in Example 1:
- a polyester based polyol with an average molecular weight of about 2000 as a base polymer produced by the condensation polymerization of phthalic anhydride and ethlene glycol, propylene glycol, glycerin or trimethylol propane;
- a polyester based polyol with an average molecular weight of about 2000 as a base polymer produced by the condensation polymerization of adipic acid and propylene glycol, glycerin or trimethylol propane;
- a polyalkylene based ether polyol with an average molecular weight of about 2000 produced by the addition polymerization of ethylene oxide (or propylene oxide or butyrene oxide) and glycerin (or sorbitol).

### EXAMPLE 2

In this embodiment, an example of the type having a covering of an airtight film is shown. As shown in Fig. 1, 50g of a polyester based polyol having an average molecular weight of about 2000 as a base polymer produced by the condensation polymerization of adipic acid and ethylene glycol, 30 g of CH₂=CHCH₂N(CH₃)₂ (bp. 63°C) as a volatile foaming agent 2 having an unsaturated group and 5 g of calcium stearate were blended to prepare 85g of a foaming hardening liquid, which was then further mixed with 60 g of hexamethylene diisocyanate as a hardening agent 3 (Fig. 1(a)), and the mixed solution 5 of polyol 1 and foaming hardening liquid 4 (the mixing ratio of the alcohol group and isocyanate group should be nearly equimolecular) was immediately put into an Al laminate film bag 6, which was then deaerated and sealed (Fig. 1(b)).

Then, by gripping by a heating panel with a gap of about 5 cm and heating at about 100 °C, the mixture was foamed and cured in several minutes, and a continuous polyurethane type foam resin 7 was sealed hermetically to form a heat insulating material (Fig. 1(c)).

Later, the covered heat insulating material was taken out of the heating plate, and irradiated with about 0,2 MGy (20 Mrad) of electron beam 8 accelerated to about 128 fJ (800 KeV). When the thickness of the sample was about 5 cm, electron rays penetrated sufficiently.

The volatile foaming agent CH₂=CHCH₂N(CH₃)₂ possessing the unsaturated group could be polymerized by the irradiation of electron rays, and the inside of the foam-cells and the gap region were reduced in pressure while keeping the shape of the bag.

The foamed polyurethane insulating material 9 (Fig. 1(d)) prepared in this way was improved in the heat insulating characteristics by about three times as compared with the material without irradiation with electron rays. The soundproof effect was also improved about three times.

The following starting materials can be processed in the same way as disclosed in Example 2:
- a polyester based polyol having an average molecular weight of about 2000 as a base polymer produced by the condensation polymerization of phthalic anhydride and ethylene glycol, propylene glycol, glycerin or trimethylolpropane;
- a polyester based polyol having an average molecular weight of about 2000 as a base polymer produced by the condensation polymerization of adipic acid and propylene glycol, glycerin or trimethylolpropane;
- a polyalkylene based ether polyol having an average molecular weight of about 2000 produced by the addition polymerization of ethylene oxide, propylene oxide or butyrene oxide and glycein or sorbitol.
- a volatile foaming agent selected from
   CCl₂=CClF(bp. 71°C)
   F(CF₂)₅CF=CF₂(bp. 81°C),
   CH₂=CHCF₂CF₂CH=CH₂ (bp. 73 °C)

Aside from the above embodiments, a granular polystyrene resin of the independent foam-cell type (closed cell type) may be prepared by adding a volatile foaming agent possessing an unsaturated group, such as perfluoroheptene, to polystyrene, gripping the combination in heating plates heated at about 120 °C with a gap of about 5 cm, and foaming and curing for about scores of seconds to several minutes. By controlling the concentration of the foaming agent in the resin and adding a surface active agent, a foamed polystyrene of the independent foam-cell type (many foam-cells in the foamed polystyrene are individually separated with walls) or a foamed polystyrene of the continuous foam-cell type (open cell type; many foam-cells are connected with each other without wall) may be prepared as desired.

Taking out the foamed polystyrene from the heating plate by hand, and then irradiating the foamed polystyrene with about 0,1 to 1 MGy (10 to 100 Mrads) of electron beams accelerated to about 128 fJ (800 KeV), at the thickness of about 5 cm, electron rays penetrated sufficiently, and the volatile foaming agent possessing an unsaturated group, such as perfluoroheptene, in the independent foam-cell type was polymerized by electron rays, so that the inside of the foam-cells could be reduced in pressure.

By mixing the volatile foaming agent possessing the unsaturated group, such as CH₂=CHCF₂CF₂CH=CH₂ with a vinyl chloride resin, and heating at about 200°C, a foamed polyvinyl chloride of the independent foam-cell type is prepared. (By controlling the concentration of the foaming agent in the resin and adding a surface active agent, either foamed polyvinyl chloride of the independent foam-cell type or foamed polyvinyl chloride of the continuous foam-cell type may be manufactured as desired).

Taking out the foamed polyvinyl chloride from the heating plate by hand, and irradiating with about 0,1 to 1 MGy (10 to 100 Mrads) of electron beams accelerated to about 128 fJ (800 KeV), whereby electron rays penetrate sufficiently, the volatile foaming agent possessing an unsaturated group, such as CH₂=CHCF₂CF₂CH=CH₂, in independent foam-cells is polymerized with electron rays, so that the inside of the individual independent foam-cells was reduced in pressure.

Furthermore, by preliminarily preparing a resol type condensate or a novolak condensate, mixing same with a volatile foaming agent having an unsaturated group, such as CCl₂=CClF, putting the mixture in a mold, and heating to about 150°C, a foamed phenol resin of the independent foam-cell type is prepared. By controlling the concentration of the foaming agent in the resin and adding a surface active agent, either a foamed phenol resin of the independent foam-cell type or foamed phenol resin of the continuous foam-cell type may be manufactured as desired.

Taking out the foamed phenol resin from the heating plate by hand, and irradiating with about 0,1 to 1 MGy (10 to 100 Mrads) of electron beams accelerated at about 128 fJ (800 KeV), whereby electron rays penetrate sufficiently, the volatile foaming agent possessing an unsaturated group, such as CCl₂=CClF, in independent foam-cells is polymerized by electron rays, and the inside of the individual independent foam-cells is reduced in pressure.

Aside from the resins used above, by using urea resins, epoxy resins, polyethylene or methacrylic resins, foamed plastics with high performance in heat insulation and soundproof effect may be similarly manufactured.

### EXAMPLE 3

The same procedure as in Example 1 was repeated except that CH₂=CHC₄H₉ having a b.p. of 54 °C was used as a foaming agent. In the foaming step, foaming by the reaction heat and curing in scores of seconds to several minutes occurred, and a foamed polyurethane of the independent foam-cell type was prepared.

By taking out the foamed urethane resin from the forming container, and irradiating with about 0,1 to 0,2 MGy (10 to 20 Mrads) of electron ray beams accelerated at about 128 fJ (800 KeV), at a thickness of about 5 cm, whereby electron rays penetrated sufficiently, the volatile foaming agent CH₂=CHC₄H₉ possessing an unsaturated group in the independent foam-cells was polymerized by electron rays to a polymer, and the inside of the individual independent foam-cells was reduced in pressure.

In the prepared foamed polyurethane, as compared with the material without irradiation with electron rays, the heat insulating performance was improved about twice. The soundproof effect was also improved about twice.

As has been shown, the invention is greatly beneficial to industry.

## Claims

1. A foamed plastic comprising foam-cells, wherein the pressure in the foam-cells is less than atmospheric pressure, and said foam-cells contain a polymerized foaming agent, which is obtainable by polymerization of a volatile foaming agent having an unsaturated carbon bond by energy beam irradiation.

2. The foamed plastic according to claim 1, wherein metal is deposited on the surface of the foamed plastic.

3. The foamed plastic according to claim 1, comprising at least one resin selected from the group consisting of polystyrene resins, vinyl chloride resins, polyurethane resins, phenol resins, urea resins, epoxy resins, polyethylene resins, polypropylene resins, methacrylic resins and silicone resins.

4. A foamed plastic covered with an airtight film, wherein the pressure in the foam-cells and the pressure in a gap region between the airtight film and the foamed plastic is less than atmospheric pressure, said foamed plastic containing a polymerized foaming agent in the foam-cells, said polymerized foaming agent being obtainable by polymerization of a volatile foaming agent having an unsaturated carbon bond by energy beam irradiation.

5. The foamed plastic according to claim 4, wherein the airtight film is at least one film selected from the group consisting of polyvinylidene chloride, polyvinyl chloride, polyethylene, polypropylene, polybutadiene, nylon, polycarbonate, cellophane, polyvinyl alcohol, polyester, metal deposition films and aluminum foil.

6. The foamed plastic according to claim 4, obtained from at least one resin selected from the group consisting of polystyrene resins, vinyl chloride resins, polyurethane resins, phenol resins, urea resins, epoxy resins, polyethylene resins, polypropylene resins, methacrylic resins and silicone resins.

7. A method of manufacturing a foamed plastic comprising foaming a mixture of a volatile polymerizable foaming agent having an unsaturated carbon bond and a resin, and irradiating the foamed mixture with an energy beam.

8. The method of manufacturing a foamed plastic according to claim 7, wherein a metal is deposited on the surface of the foamed plastic.

9. A method of manufacturing a foamed plastic comprising sealing a mixture of a resin and a volatile polymerizable foaming agent having an unsaturated carbon bond with an airtight film bag, foaming the mixture, and irradiating the foamed mixture with an energy beam through the airtight film.

## Patentansprüche

1. Schaumkunststoff, der Schaumstoffzellen umfaßt, wobei der Druck in den Schaumstoffzellen niedriger ist als der Atmosphärendruck und die Schaumstoffzellen einen polymerisierten Schaumbildner enthalten, der durch Polymerisation eines flüchtigen Schaumbildners mit einer ungesättigten Kohlenstoffbindung durch Bestrahlung mit Energiestrahlen zu erhalten ist.

2. Schaumkunststoff nach Anspruch 1, wobei Metall auf die Oberfläche des Schaumkunststoffes aufgetragen wird.

3. Schaumkunststoff nach Anspruch 1, der mindestens ein Harz umfaßt, ausgewählt aus der Gruppe, die aus Polystyrolharzen, Vinylchloridharzen, Polyurethanharzen, Phenolharzen, Harnstoffharzen, Epoxyharzen, Polyethylenharzen, Polypropylenharzen, Methacrylharzen und Silikonharzen besteht.

4. Schaumkunststoff, der mit einem luftdichten Film überzogen ist, wobei der Druck in den Schaumstoffzellen und der Druck in einem Zwischenraum zwischen dem luftdichten Film und dem Schaumkunststoff niedriger ist als der Atmosphärendruck, der Schaumkunststoff einen polymerisierten Schaumbildner in den Schaumstoffzellen enthält, der polymerisierte Schaumbildner durch Polymerisation eines flüchtigen Schaumbildners mit einer ungesättigten Kohlenstoffbindung durch Bestrahlung mit Energiestrahlen zu erhalten ist.

5. Schaumkunststoff nach Anspruch 4, wobei der luftdichte Film mindestens ein Film ist, ausgewählt aus der Gruppe, die aus Polyvinylidenchlorid, Polyvinylchlorid, Polyethylen, Polypropylen, Polybutadien, Nylon, Polycarbonat, Cellophan, Polyvinylalkohol, Polyester, aufgebrachten Metallfilmen und Aluminiumfolie besteht.

6. Schaumkunststoff nach Anspruch 4, der aus mindestens einem Harz erhalten wird, ausgewählt aus der Gruppe, die aus Polystyrolharzen, Vinylchloridharzen, Polyurethanharzen, Phenolharzen, Harnstoffharzen, Epoxyharzen, Polyethylenharzen, Polypropylenharzen, Methacrylharzen und Silikonharzen besteht.

7. Verfahren zum Herstellen eines Schaumkunststoffes, welches das Verschäumen einer Mischung eines flüchtigen polymerisierbaren Schaumbildners mit einer ungesättigten Kohlenstoffbindung und eines Harzes und Bestrahlen der Schaummischung mit einem Energiestrahl umfaßt.

8. Verfahren zum Herstellen eines Schaumkunststoffes nach Anspruch 7, worin ein Metall auf die Oberfläche eines Schaumkunststoffes aufgetragen wird.

9. Verfahren zum Herstellen eines Schaumkunststoffes, welches das Versiegeln einer Mischung eines Harzes und eines flüchtigen polymerisierbaren Schaumbildners mit einer ungesättigten Kohlenstoffbindung mit einem luftdichten Filmbeutel, Verschäumen der Mischung und Bestrahlen der Schaummischung mit einem Energiestrahl durch den luftdichten Film umfaßt.

## Revendications

1. Plastique expansé comprenant des cellules expansées, dans lequel la pression dans les cellules expansées est inférieure à la pression atmosphérique et lesdites cellules expansées contiennent un agent d'expansion polymérisé qui peut être obtenu par polymérisation d'un agent d'expansion volatil, ayant une liaison carbonée insaturée, par irradiation par un faisceau d'énergie.

2. Plastique expansé selon la revendication 1, dans lequel un métal est déposé sur la surface du plastique expansé.

3. Plastique expansé selon la revendication 1, comprenant au moins une résine choisie dans le groupe constitué des résines de polystyrène, des résines de chlorure de vinyle, des résines de polyuréthane, des résines phénoliques, des résines d'urée, des résines époxy, des résines de polyéthylène, des résines de polypropylène, des résines méthacryliques et des résines de silicone.

4. Plastique expansé recouvert avec une pellicule étanche à l'air, dans lequel la pression dans les cellules expansées et la pression d'une région d'interstice, entre la pellicule étanche à l'air et le plastique expansé, sont inférieures à la pression atmosphérique, ledit plastique expansé contenant un agent d'expansion polymérisé dans les cellules expansées, ledit agent d'expansion polymérisé pouvant être obtenu par polymérisation d'un agent d'expansion volatil ayant une liaison carbonée insaturée par irradiation par un faisceau d'énergie.

5. Plastique expansé selon la revendication 4, dans lequel la pellicule étanche à l'air est au moins une pellicule choisie dans le groupe constitué d'un polychlorure de vinylidène, d'un polychlorure de vinyle, d'un polyéthylène, d'un polypropylène, d'un polybutadiène, d'un nylon, d'un polycarbonate, de la cellophane, d'un alcool polyvinylique, d'un polyester, des pellicules de dépôt métallique et d'une feuille d'aluminium.

6. Plastique expansé selon la revendication 4, obtenu à partir d'au moins une résine choisie dans le groupe constitué des résines de polystyrène, des résines de chlorure de vinyle, des résines de polyuréthane, des résines phénoliques, des résines d'urée, des résines époxy, des résines de polyéthylène, des résines de polypropylène, des résines méthacryliques et des résines de silicone.

7. Procédé de fabrication d'un plastique expansé comprenant l'expansion d'un mélange d'un agent d'expansion volatil polymérisable ayant une liaison carbonée insaturée et d'une résine, et l'irradiation du mélange expansé avec un faisceau d'énergie.

8. Procédé de fabrication d'un plastique expansé selon la revendication 7, dans lequel un métal est déposé à la surface du plastique expansé.

9. Procédé de fabrication d'un plastique expansé, comprenant le scellement d'un mélange d'une résine et d'un agent d'expansion volatil polymérisable ayant une liaison carbonée insaturée, avec une enveloppe en pellicule étanche à l'air, l'expansion du mélange et l'irradiation du mélange expansé avec un faisceau d'énergie au travers de la pellicule étanche à l'air.
